Europäisches Patentamt

European Patent Office

Office européen des brevets

(11) Publication number: **0 556 535 A1**

# EUROPEAN PATENT APPLICATION

(21) Application number: **92830073.0**

(22) Date of filing: **20.02.92**

(51) Int. Cl.5: **H01M 4/92**, B01J 23/89

(43) Date of publication of application:
**25.08.93 Bulletin 93/34**

(84) Designated Contracting States:
**DE GB IT**

(71) Applicant: **Tanaka Kikinzoku Kogyo K.K.**
**No. 6-6, Nihonbashi-Kayabacho, 2-chome**
**Chuo-ku Tokyo(JP)**
Applicant: **STONEHART ASSOCIATES INC.**
**17 Cottage Road, P.O. Box 1220**
**Madison, Connecticut 06443(US)**

(72) Inventor: **Stonehart, Paul**
**56 Island Avenue, P.O. Box 1220**
**Madison, Connecticut 06443(US)**
Inventor: **Watanabe, Masahiro**
**No. 2412-8, Wadamachi**
**Kofu-shi, Yamanashi(JP)**
Inventor: **Yamamoto, Nobuo, c/o TANAKA**
**KIKINZOKU KOGYO**
**TECHNICAL CENTER, No. 2-73, Shincho**
**Hiratsuka-shi, Kanagawa(JP)**
Inventor: **Nakamura, Toshihide, c/o TANAKA**
**KIKINZOKU KOGYO**
**TECHNICAL CENTER, No. 2-73, Shincho**
**Hiratsuka-shi, Kanagawa(JP)**
Inventor: **Hara, Noriaki, c/o TANAKA**
**KIKINZOKU KOGYO**
**TECHNICAL CENTER, No. 2-73, Shincho**
**Hiratsuka-shi, Kanagawa(JP)**
Inventor: **Tsurumi, Kazunori, c/o TANAKA**
**KIKINZOKU KOGYO**
**TECHNICAL CENTER, No. 2-73, Shincho**
**Hiratsuka-shi, Kanagawa(JP)**

(74) Representative: **Pellegri, Alberto et al**
**c/o Società Italiana Brevetti S.p.A. Via**
**Puccini, 7**
**I-21100 Varese (IT)**

(54) **Electrocatalyst for anode.**

(57) Disclosed is an electrocatalyst for anode which comprises an inorganic support and a ternary alloy essentially consisting of platinum-nickel-cobalt supported on the support. The electrocatalyst possesses excellent anti-poisoning against carbon monoxide.

Rank Xerox (UK) Business Services
(3.10/3.6/3.3.1)

Background of the Invention

The present invention relates to a ternary catalyst employed as an electrocatalyst for anode of a fuel cell.

A carbon catalyst supported with element platinum as electrode material has been heretofore widely employed as an electrocatalyst for anode of a fuel cell.

However, as an anode gas of the fuel cell, such a reformed gas as a liquefied natural gas (LNG) is employed in which a carbon monoxide gas (CO) is contained.

Platinum is likely to adsorb the carbon monoxide gas which results in considerable poisoning at a low temperature.

In order to avoid the poisoning, the fuel cell is operated at a temperature more than 190 °C to reduce the influence of the carbon monoxide.

In the fuel cell having the element platinum catalyst, its reaction is conducted at a temperature more than that required inevitably employing disadvantageous various operation conditions encountered in higher temperature reactions. Further, the poisoning cannot be completely avoided even under said conditions resulting in the advance of polarization to invite the lowering of electrode performance.

A fuel cell employing a solid polymer electrode (SPE) possesses a problem that the poisoning of the element platinum with the carbon monoxide is hardly avoided because of a lower operation temperature due to the weakness of the electrolyte against heat.

In order to overcome these problems, a catalyst comprising a platinum-palladium alloy or a platinum-ruthenium alloy is already known.

However, the improvement attained by employing these catalysts is unsatisfactory and a further improvement is desirably requested.

Summary of the Invention

An object of the present invention is to provide an electrocatalyst free from the above drawbacks of the prior art.

Another object is to provide an electrocatalyst for anode of a fuel cell having excellent anti-poisoning against carbon monoxide.

A further object is to provide an electrocatalyst for anode of a fuel cell manufactured at a lower cost.

The present invention is an electrocatalyst for anode which comprises an inorganic support and a ternary alloy essentially composed of platinum-nickel-cobalt supported on the support.

Although in a conventional electrocatalyst the poisoning by carbon monoxide is considerably large to lower its cell voltage, the electrocatalyst of the invention enables the operation with effective depression of the poisoning by the carbon monoxide.

Detailed Description of the Invention

The electrocatalyst of the present invention comprises an inorganic support and a catalyst essentially composed of platinum-nickel-cobalt supported on the support, and may contain a small amount of other precious metals or base metals than the above catalyst metals or any other other impurities providing no harmful effects on the catalyst performance.

The composition of the above catalyst is preferably 10 to 50 atomic percent of the platinum, 10 to 50 atomic percent of the nickel and 10 to 50 atomic percent of the cobalt, and is more preferably 50 atomic percent, 25 atomic percent and 25 atomic percent in this turn.

The support on which the respective metals are supported may not be restricted as long as the support is a porous inorganic substance, but it is most preferable to employ an inorganic oxide support such as silica and alumina, and a carbon support when the precious metals are supported as they are.

A method of supporting these precious metals is not especially restricted. A conventional heat decomposition method which consists of covering a solution dissolving compounds of the respective precious metals on the support by means of applying or the like and of thermally treating the precious metal compounds applied to decompose and convert them to the corresponding precious metals, may be employed.

Since, however, the thermal treatment would bring about agglomeration of the precious metal particles to deteriorate the electrode performance, a following method may be preferably employed for obtaining a ternary catalyst having a more uniform particle size and high performance.

The method will be illustrated specifying platinum as a first metal and nickel and cobalt as second metals.

In this method, a support on which a first metal has been already supported is employed. Although the supporting process of the first metal on the support is not especially restricted, highly dispersed catalyst cannot be obtained if the supporting state of the first metal is poor or the degree of agglomeration is high and the surface area is small even if the second metals are supported in accordance with a supporting method mentioned below. Accordingly, the supporting of the first metal is preferably carried out employing a process by which the catalyst metal to be supported can be supported in a relatively excellent supporting state. For example, a metal compound corresponding to the platinum which is the first metal is preferably reduced by means of a following relatively weak reductant to deposit and support the platinum.

After the support is impregnated with a solution of a platinum containing ion, for example, an aqueous solution of chloroplatinic acid, the platinum-containing ion is reduced by means of such a weak reductant as sodium thiosulfate ($Na_2S_2O_3.5H_2O$), potassium thiosulfate, ammonium thiosulfate, sodium metabisulfite, potassium metabisulfite and ammonium metabisulfite to deposit the platinum metal on the support. Before the impregnation to the support, the chloroplatinic acid may be reduced to the platinum which is then deposited on the carbon support.

On the inorganic support on which the first metal has been supported at the highly dispersed state in this manner, the second metals, that is, nickel and cobalt are supported.

It is desirable to employ an amine salt of an organic acid of the nickel and the cobalt, preferably an organic amine salt of formic acid or of acetic acid, in the supporting of the second metals. The organic amine salt may be prepared by, for example, adding ammonium hydroxide into a warm aqueous solution of the formate or the acetate of the nickel and the cobalt. When an ordinary metal salt (e.g. nitrate) is thermally treated in a conventional process, high temperature reduction is necessary to alloy platinum with a fire-resistant oxide formed by the thermal treatment so that the crystal growth (decrease of surface area) may occur prior to the alloying of the platinum. On the other hand, by the procedure of this invention, the metal salt can easily be reduced at a relatively low temperature with the minimum decrease of the surface area.

After, if necessary, impure metals in the metal salts are removed by extraction and dried, the metal salts are reduced in hydrogen, for example, at 250 °C for 30 minutes and then the metals are alloyed at an elevated temperature e.g. 700 °C.

The amount of the metal salts of the organic acid amines is so adjusted that 10 to 50 atomic percent of the platinum and each of 10 to 50 atomic percent of the nickel and the cobalt, most preferably 50 atomic percent of the platinum and each 25 atomic percent of the nickel and the cobalt are contained in the catalyst.

Examples

The present invention will now be described in detail in connection with the following Example. However, this Example does not restrict the scope of the present invention.

Example

1.5 g of chloroplatinic acid was dissolved in 300 ml of water in a vessel of a which a volume was 500 ml. 10 ml out of 75 ml of a solution in which 3 g of $Na_2S_2O_3.5H_2O$ was dissolved was added dropwise into the above solution for 3 minutes and the rest of 65 ml was added all at once, and the solution was stirred at 27 °C. With the lapse of time, the mixed solution became from yellow to orange, further to dark orange.

After the lapse of about 3 hours, the room was darkened and the light of an electric bulb was applied to the vessel, then the scatter of the light was observed. On the other hand, 10 g of Acetylene Black to be employed as a catalyst support was suspended in 100 ml of pure water to prepare a well suspended slurry which was then added to the above mixed solution. The solution was stirred for 2 minutes with a supersonic agitator so that the mixed solution was forced to penetrate into the pores of the support. The slurry was kept to be suspended and did not precipitate during the stirring operation.

The slurry was dried in an oven at 75 to 80 °C overnight for removing water. The dry powder thus obtained was washed three times with about 200 ml of distilled water so that the by-products were extracted and removed. This slurry was further dried overnight at 70 °C to obtain the carbon support supported with the platinum.

The average platinum size of the platinum-carbon catalyst thus obtained was 18Å by X-ray diffraction, and the platinum particles were observed using a transmission electron microscope to have a nearly uniform particle size. The specific surface area was 155 m²/g and the amount of the supported platinum was 5 percent in weight according to an electrochemical hydrogen adsorption-desorption method.

To a mixed solution of 50 ml of a nickel formate aqueous solution (0.77 mmol) and of 50 ml of a cobalt acetate aqueous solution (0.77 mmol) was added an ammonium hydroxide aqueous solution until the pH of the solution reached 10, and the solution was stirred for 5 minutes at 50 °C. To the mixed solution of the nickel salt of the formate amine and of the cobalt salt of the acetate amine was added 1.5 g of the above carbon support catalyst supported with only the platinum, and the solution was stirred for 10 minutes at 50 °C. After the obtained slurry was dried and reduced in a hydrogen flow, the temperature of the catalyst atmosphere was elevated to 900 °C and the slurry was treated for about one hour to alloy the platinum, and the nickel and the cobalt.

The catalyst thus obtained was examined employing X-ray diffraction to find out that the diffraction angle of the platinum was shifted to a higher angle side which might show the occurrence of the alloying. The particle size of the alloy was about 30 in weight percent and the concentration of the platinum in the catalyst was 5 percent in weight.

To this alloy catalyst was added tetrafluoroethylene dispersion in a weight ratio of 7 : 3 , the mixture being then applied to a carbon sheet hydrophobically treated which was then sintered to prepare an electrode.

The respective supporting amounts of the platinum, the nickel and the cobalt were 0.1 $mg/cm^2$, 0.015 $mg/cm^2$ and 0.015 $mg/cm^2$.

After the electrode was incorporated in a half cell of which an electrolyte was 100 % phosphoric acid, the electrode potentials were measured under various conditions. The results are shown in Table 1.

Table 1

Anode Characteristics of Electrocatalyst for Fuel Cell

(Unit:mV)

| Temperature | 160 ℃ | | 180 ℃ | | 200 ℃ | |
|---|---|---|---|---|---|---|
| Current Density | A | B | A | B | A | B |
| 0.1 A/cm² | 8 | 6 | 7 | 5 | 5 | 4 |
| 0.2 A/cm² | 13 | 9 | 9 | 6 | 8 | 5 |
| 0.3 A/cm² | 19 | 13 | 14 | 9 | 11 | 7 |
| 0.5 A/cm² | 36 | 20 | 25 | 17 | 19 | 13 |
| 1.0 A/cm² | 70 | 41 | 55 | 36 | 46 | 25 |

A : 2 ％ C O／28％ C O₂／70％ H₂

B : 20％ C O₂／70％ H₂

Comparative Example

A catalyst was prepared according to the same procedures as those of Example except that only platinum was supported employing the amount twice of the platinum of Example.

The platinum concentration was 10 percent in weight.

The supported amount of the platinum in the electrode was 0.2 mg/cm$^2$.

The electrode potentials were measured similarly to Example employing the said electrode. The results are shown in Table 2.

Table 2

Anode Characteristics of Electrocatalyst for Fuel Cell

(Unit: mV)

| Temperature | 160 ℃ | | 180 ℃ | | 200 ℃ | |
|---|---|---|---|---|---|---|
| Current Density | A | B | A | B | A | B |
| 0.1 A/cm$^2$ | 10 | 6 | 7 | 4 | 5 | 3 |
| 0.2 A/cm$^2$ | 20 | 12 | 14 | 9 | 10 | 6 |
| 0.3 A/cm$^2$ | 31 | 18 | 23 | 14 | 16 | 10 |
| 0.5 A/cm$^2$ | 63 | 29 | 49 | 22 | 31 | 16 |
| 1.0 A/cm$^2$ | 130 | 62 | 96 | 55 | 72 | 40 |

A: 2%CO／28%CO$_2$／70%H$_2$

B: 20%CO$_2$／70%H$_2$

From Tables 1 and 2, it is apparent that the electrode potential of the platinum-nickel-cobalt ternary alloy catalyst of Example is about one-half of that of the element platinum catalyst of Comparative Example at a current density not less than 0.5 A/cm$^2$, and this comparison proves the excellence of the electrode properties of Example.

**Claims**

1.  An electrocatalyst for anode which comprises an inorganic support and a ternary alloy essentially consisting of platinum-nickel-cobalt supported on the support.

2.  The electrocatalyst as claimed in Claim 1, wherein the ternary alloy consists of 10 to 50 % of the platinum, 10 to 50 % of the nickel and 10 to 50 % of the cobalt.

European Patent
Office

EUROPEAN SEARCH REPORT

Application Number

EP    92 83 0073
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2 115 394 (UNITED AIRCRAFT CORPORATION) <br> * page 1, line 1-8; claim 1 * <br> * page 3, line 2 - line 11 * | 1 | H01M4/92 <br> B01J23/89 |
| X | EP-A-0 330 627 (TANAKA KIKINZOKU KOGYO K.K.) <br> * column 4, line 8 - line 24; claims 1,2; example 4 * | 1,2 | |
| X | CHEMICAL ABSTRACTS, vol. 109, no. 26, 25 July 1988, Columbus, Ohio, US; abstract no. 234216w, 'CATALYSTS FOR FUEL-CELL CATHODES' <br> * abstract * <br> & JP-A-63190254 ( TANAKA NOBLE METAL INDUSTRIAL CO. ) (05-08-1988) | 1,2 | |
| X | EP-A-0 355 853 (N. E. CHEMCAT CORPORATION) <br> * page 12, line 15; example 17 * | 1,2 | |
| X | EP-A-0 450 849 (JOHNSON MATTHEY PUBLIC LIMITED COMPANY) | 1 | TECHNICAL FIELDS SEARCHED (Int. Cl.5 ) <br><br> H01M <br> B01J |
| X | GB-A-1 047 933 (ESSO RESEARCH AND ENGINEERING COMPANY) <br> * page 2, line 105 - line 110; claims 1,6 * | 1 | |
| X | FR-A-2 304 185 (STAMICARBON B. V.) <br> * page 3, line 13 - line 24 * | 1 | |

-/--

The present search report has been drawn up for all claims

| Place of search | Date of completion of the search | Examiner |
|---|---|---|
| THE HAGUE | 13 NOVEMBER 1992 | D'HONDT J.W. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PROCEEDINGS OF THE 24TH INTERSOC. ENERGY CONVERSION ENG. CONFERENCE 6-11 AUGUST 1989 vol. 3, WASHINGTON pages 1581 - 1586 , XP000078909 J. KOSEK ET AL 'DEVELOPMENT OF LOW COST, CARBON-SUPPORTED CARBON MONOXIDE TOLERANT CATALYSTS FOR PHOSPHORIC ACID AND PROTON EXCHANGE MEMBRANE FUEL CELL SYSTEMS' * page 1582, right column, paragraph 1 * * page 1583, left column, paragraph 2 * | 1 | |
| A | JOURNAL OF THE ELECTROCHEMICAL SOCIETY vol. 116, no. 4, April 1969, MANCHESTER, NEW HAMPSHIRE US pages 516 - 520 D. W. MCKEE ET AL 'ELECTROCATALYSTS FOR HYDROGEN/CARBON MONOXIDE FUEL CELL ANODES' * abstract * * page 516, left column, paragraph 2 * | 1 | |
| | | | TECHNICAL FIELDS SEARCHED (Int. Cl.5 ) |

The present search report has been drawn up for all claims

| Place of search | Date of completion of the search | Examiner |
|---|---|---|
| THE HAGUE | 13 NOVEMBER 1992 | D'HONDT J.W. |

EPO FORM 1503 03.82 (P0401)